# EUROPEAN PATENT SPECIFICATION

(11) **EP 2 990 224 B1**
(45) Date of publication and mention of the grant of the patent: **29.03.2017**
(21) Application number: 15181331.8
(22) Date of filing: 18.08.2015
(51) Int. Cl.: B60C 11/00, B60C 1/00, B60C 5/00

(54) **TIRE WITH RUBBER TREAD OF INTERMEDIAL AND PERIPHERAL STRATIFIED ZONES**
REIFEN MIT GUMMILAUFFLÄCHEN IN DEN INTERMEDIALEN UND PERIPHEREN GESCHICHTETEN ZONEN
PNEU AVEC BANDE DE ROULEMENT EN CAOUTCHOUC DE ZONES STRATIFIÉES PÉRIPHÉRIQUES ET INTERMÉDIAIRES

(30) Priority: 27.08.2014 US 201414470053
(43) Date of publication of application: 02.03.2016
(73) Proprietor: The Goodyear Tire & Rubber Company, Akron, Ohio 44316 (US)
(72) Inventor: ZHAO, Junling, Hudson, OH Ohio 44236 (US); MEZA, Roberto Cerrato, North Canton, OH Ohio 44720 (US); YOUNG, Austin Gale, Wadsworth, 44281 (US)
(74) Representative: Kutsch, Bernd

(56) References cited:
- JP-A- 2009 051 314
- US-A- 4 385 653

## Description

### Field of the Invention

The invention relates to a tire having a rubber tread of a circumferentially zoned tread including stratified lateral tread zones. The tread zones comprise three circumferential load bearing zones, with each zone containing a portion of the running surface of the tread, comprising an intermedial zone positioned between and two stratified lateral tread zones. The intermedial and stratified lateral zones comprise rubber compositions having differentiated rebound physical properties. The intermedial rubber zone, or layer, overlays a tread base rubber layer and underlies the lateral tread layer zones. The lateral tread zones are stratified in a sense of being separated from each other and also separated from the tread base rubber layer by the intermedial rubber layer. The stratified lateral tread zones are peripheral tread zones, or layers.

### Backaround for the Invention

Tire treads for pneumatic tires typically have running surfaces of a unitary rubber composition and therefore rubber properties attributed to the tread rubber composition across the face of the tread. The tread is usually composed of a lug and groove configuration composed of ground-contacting lugs with intervening grooves between the lugs.

Tires intended for heavy duty, in a sense of carrying large loads, such as for example truck tires, are typically intended to experience internal heat generation during the service, or operation, of the tire and to experience considerable stress at peripheral outer, or lateral, portion(s) of the tread, including tread grooves contained in the tread's ground-contacting stratified lateral zones due to, for example, vehicular cornering and tire scuffing against roadside objects including, for example, roadside curbs. When such tire stress is excessive, a surface cracking of a surface of a groove wall contained in a stratified lateral zone of the tread may occur in response to the considerable stress.

The outer, ground-contacting, tread cap rubber layer is typically comprised of a relatively low hysteretic rubber composition to promote relatively low internal heat generation as the tire is used in service as evidenced by relatively high rubber rebound and relatively low tan delta physical properties to, in turn, thereby promote a low rolling resistance of the tire tread as well as extended tread shoulder groove durability.

For this invention, it is proposed to provide the outer tread cap rubber layer in a form of circumferential zones of significantly different physical properties, particularly rubber compositions of differing physical properties such as hot rebound (100°C) properties (measured in accordance with ASTM D1054 or DIN 53512 using a Zwick rebound resiliometer) which are indicative of hysteresis of the rubber composition and predictive of rate of internal heat generation during use of the tire and also predictive of rolling resistance of the tire. For this invention, such tread zones are provided as an intermedial rubber zone to promote lower hysteresis with resultant lower internal heat build-up across the breadth of the tire tread positioned between and underlying lateral, stratified rubber zones.

In particular, it is proposed to provide the intermedial rubber zone, which extends across the underlying tread base rubber layer, with a higher 100°C hot rebound property, thereby a lower hysteresis property, than the stratified overlying lateral tread zones to promote a relative maximization of reduced internal heat build-up within the tread. The stratified lateral tread zone rubber composition is therefore proposed to have a relatively lower 100°C hot rebound property, thereby a higher hysteresis. It is further desired for the lateral tread zone rubber composition to have a greater tear resistance property compared to the intermedial tread zone rubber, particularly to reinforce tread grooves contained in the stratified lateral tread zones.

Historically, tires have heretofore been proposed having an outer surface composed of a plurality of circumferential zones of rubber compositions to promote various properties for the tread's running surface.

For example, see US-B-8,662,123; US-B-7,789,117; US-B-7,559,348; US-B-7,131,474 and US-B-6,959,744; US-A-2007/0017617; US-A-2009/0107597 and EP 0 718 127 B1, EP 0 798 142 A1 and DE 198 12 934 C1.

However, it is hereby proposed to provide a tire with tread containing a plurality of circumferential intermedial and stratified zones of rubber compositions to promote significantly differentiated physical properties to include rebound properties to therefore promote differentiated hysteresis properties. The higher rebound property (e.g. lower hysteresis property) for the tread intermedial zone layer, as compared to the lateral stratified zone layer, is desired to promote, or maximize, a beneficially lower internal heat build up for the tread.

In this manner then, the central portion of the tread is a dual layered composite of an intermedial tread cap rubber zone layer and tread base rubber layer. The lateral (peripheral) portions of the tread are triple layered composites of the stratified rubber zones, the portion of the intermedial tread zone which extends beneath and underlies the lateral tread zones and the tread base rubber layer which underlies the intermedial tread zone.

The tire tread thereby comprises a cooperative layered composite of the aforesaid circumferential rubber layers.

In one embodiment, tread grooves are contained in both the intermedial tread zone and the lateral tread zones. By providing the lateral tread zone rubber layers with a tear resistance property, it is intended that tear resistance of the surface of the grooves contained in the lateral portion of the tread is promoted.

In the description of this invention, the terms "rubber" and "elastomer" may be used interchangeably, unless otherwise provided. The terms "rubber composition", "compounded rubber" and "rubber compound" may be used interchangeably to refer to "rubber which has been blended or mixed with various ingredients and materials". The terms "cure" and "vulcanize "may be used interchangeably unless otherwise provided. The term "phr" may be used to refer to parts of a respective material per 100 parts by weight of rubber, or elastomer.

JP-A-2009-51314 describes a tire in accordance with the preamble of claim 1.

US-A-4,385,653 describes a pneumatic tire having a central tread zone and two adjacent lateral tread zones on both sides of the central tread zone.

### Summary and Practice of the Invention

The invention relates to a tire in accordance with claim 1.

Dependent claims refer to preferred embodiments of the invention.

In accordance with a preferred aspect of this invention, a tire is provided having a circumferential rubber tread composed of a cap/base configuration comprising an outer tread cap rubber layer with a lug and groove configuration with the outer portions of the tread lugs providing the running surface of the tread, and a tread base rubber layer underlying the outer tread cap rubber layer;
wherein the outer tread cap rubber layer is composed of at least three or three circumferential load bearing zones comprising an intermedial tread zone rubber layer positioned between and extending beneath two lateral tread zone rubber layers to thereby underlie the lateral tread zone rubber layers and overlay the tread base rubber layer to therefore stratify the lateral tread zone rubber layers as being separated from each other and from the tread base rubber layer;
wherein outer lug surfaces of the intermedial tread zone rubber layer and the lateral tread zone rubber layers comprise the running surface of the tread;
wherein rubber composition of the intermedial tread zone rubber layer has a 100°C hot rebound property (ASTM D1054 or DIN 53512) greater than the 100°C hot rebound property of the rubber composition of the stratified lateral tread rubber layers.

In one embodiment, the value of the 100°C hot rebound property of the intermedial tread zone rubber composition is at least 4 units greater than the 100°C hot rebound property value of the stratified tread zone rubber composition.

For example, the 100°C hot rebound value of the intermedial tread zone rubber composition may be in arrange of from 60 to 80 percent and the 100°C hot rebound value of the rubber composition of the stratified tread zone rubber composition may be in a range of from 56 to 76 so long as the 100°C rebound values differ by at least 4 units (e.g. percentage units, for example, a hot rebound value of 80 percent for the intermedial zone rubber composition and hot rebound value of 76 percent, or less, for the stratified lateral tread zone rubber composition).

The stratified lateral tread zone rubber composition has an at least 20 percent greater tear resistance property than the intermedial tread zone rubber.

The particulate reinforcement of the rubber compositions of the intermedial tread rubber zone and stratified lateral tread rubber zones may be the same or different and comprising rubber reinforcing carbon black and/or precipitated silica reinforcement so long as the 100°C hot rebound property of the rubber composition of the intermedial tread rubber zone is greater than the 100°C hot rebound property of the rubber composition of the stratified lateral rubber zones.

The elastomers of the rubber compositions of the intermedial tread rubber zone and stratified lateral tread rubber zones may be the same or different so long as the 100°C hot rebound property of the rubber composition of the intermedial tread rubber zone is greater than the 100°C hot rebound property of the rubber composition of the stratified lateral rubber zones.

For example, in one embodiment, the rubber composition of the intermedial zone and/or stratified lateral zones may be silica-rich in a sense of containing at least 40 phr of precipitated silica and a maximum of 30 phr of rubber reinforcing carbon black so long as the 100°C hot rebound property of the intermedial tread zone is greater than the 100°C hot rebound property of the stratified tread zones.

For example, in one embodiment the rubber composition of the intermedial zone and/or stratified lateral zones may be carbon black rich in a sense of containing at least 40 phr of rubber reinforcing carbon black zones so long as the 100°C hot rebound property of the intermedial tread zone is greater than the 100°C hot rebound property of the stratified tread zones.

In one embodiment, the span of the running surface of the intermedial tread zone rubber layer axially spans from 30 to 80 percent of the running surface of the tread cap rubber layer and the two stratified lateral tread rubber zone rubber layers collectively span from 20 to 70 percent of the running surface of the tread cap rubber layer where said span of running surface of the tread includes the running surfaces of the tread lugs and widths of the tread grooves between the tread lugs.

In one embodiment, the span of the running surfaces of the two individual stratified lateral tread zones may be of equal widths, or at least of substantially equal widths, or may be asymmetrical in a sense that they are of unequal widths, namely, for example, of widths within 80 to 120 percent of each other.

As indicated, the span of the running surface of the tread cap layer includes the outer running surface of the tread lugs (intended to be ground contacting) and the width of the included grooves between the lugs.

In one embodiment, the Grosch abrasion rate (e.g. Grosch high abrasion rate) of the rubber composition of the running surfaces of the intermedial tread rubber layer and stratified lateral tread zone rubber layers are desirably similar. For example, in one embodiment their Grosch abrasion rates may be within 5 to 20 percent of each other.

In one embodiment, the tear resistance (Newtons at 95°C) of the rubber composition of the stratified lateral tread zones is at least 20 percent greater than the tear resistance of the rubber composition of the intermedial tread zone.

In one embodiment, the stratified lateral tread zones, intermedial tread zone and underlying tread base are co-extruded together to form an integral and unified tread composite.

In one embodiment, the rubber composition of the intermedial, tread cap zone has a lower tan delta value at 10 percent strain (100°C) than the rubber composition of the two lateral tread cap zones which is predictive of lower hysteresis which is, in turn, predictive of lower internal heat buildup during tire service and a beneficially lower rolling resistance contribution of the intermedial tread cap rubber layer for the tire.

In a preferred aspect of the invention, the silica is a precipitated silica and/or the carbon black is a rubber reinforcing carbon black.

In a preferred aspect of the invention, the Grosch high severity abrasion rate of the rubber compositions of the running surfaces of the intermediate tread zone running surface and the lateral tread zone surface are equal or similar.

In a preferred aspect of the invention, the lateral tread zones, the intermediate tread zone and the underlying tread base layer are co-extruded together to form an integral and unified tread composite.

Accordingly, it is an aspect of this invention to provide a significant balance of physical properties of rubber compositions between the intermedial tread zone and stratified lateral tread zones in a manner of being a departure from past practice.

It is to be appreciated that one having skill in rubber compounding for tire treads can readily provide the tread zones with the indicated rubber composition properties with routine experimentation and without undue experimentation.

### Brief Description of the Drawings

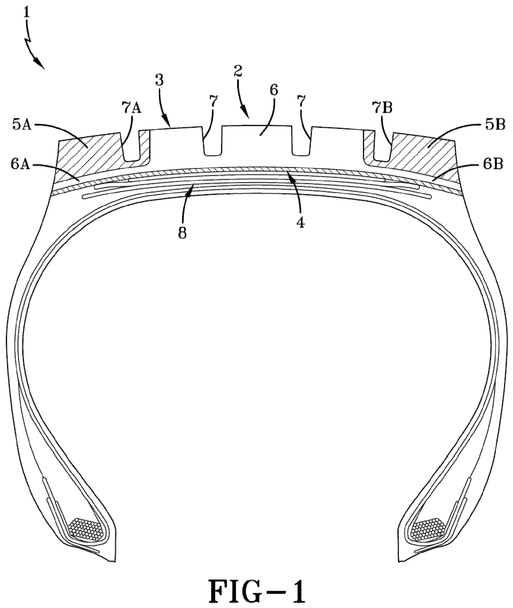

Drawings are presented to provide a further understanding of the invention. In the Drawings, Figure 1 is provided to illustrate a partial cross sectional view of a tire with a circumferential tread of a cap/base configuration where the outer cap rubber layer is divided into three circumferential tread zones, namely two spaced apart lateral tread zones and an intermedial tread zone of which a portion extends in an axially outward direction from each side of the intermedial tread zone beneath the lateral tread zones and adjoins and separates the lateral tread zones from each other and from the tread base rubber layer to thereby stratify the lateral tread zones.

### The Drawings

In the drawings, FIG 1 illustrates a pneumatic tire partial cross section 1 having a tread 2 of a cap/base configuration, namely an outer tread cap rubber layer 3 of a lug and groove configuration and an underlying tread base rubber layer 4. The outer tread cap rubber layer 3 contains tread running surfaces (not numbered) contained on the outer surfaces of the tread lugs of the tread 2 and is composed of three circumferential tread zones, each a part of the tread's running surface, comprising an intermedial tread zone rubber layer 6 between two spaced apart individual lateral tread zones 5A and 5B of which portions 6A and 6B of the intermedial tread zone 6 extend beneath and thereby underlie both of the lateral (peripheral) tread zones 5A and 5B and also overlay the tread base rubber layer 4. The outlying lateral (peripheral) tread zones 5A and 5B are thereby stratified in a sense being spaced apart from each other and spaced apart from the tread base rubber layer 4. The tread base rubber layer 4 thereby underlies the intermedial tread zone rubber layer 6 and is exclusive of the lateral tread zones 5A and 5B. The lateral tread zones 5A and 5B are shown as being of the same width although they may be of widths which differ from each other.

The tread lug and groove configuration provides tread lugs with intervening grooves with grooves 7 contained in the intermedial tread zone layer 6 and grooves 7A and 7B contained in the stratified lateral tread zone layers 5A and 5B with each of the stratified lateral tread zones thereby containing at least one tread groove. For such purpose, it is desired that the stratified tread zone layer rubber compositions have a significantly greater tear resistance property than the intermedial zone layer rubber composition to thereby aid in protecting the tread grooves 7A and 7B contained in the stratified lateral tread zone layers 5A and 5B.

For FIG 1, the intermedial tread zone 6 is depicted as constituting 45 to 60 percent of the spanned running surface of the tire tread 2 and the two individual lateral tread zone layers 5A and 5B are of a substantially equal width and correspondingly collectively constitute 55 to 40 percent of the spanned running surface of the tire tread 2.

For exemplary FIG 1, the intermedial and stratified lateral tread zone rubber compositions may comprise the same or different elastomers and contain the same or different reinforcing fillers selected from rubber reinforcing carbon black and precipitated silica so long as the 100°C hot rebound property of the intermedial zone rubber is greater than that of the stratified later zone rubbers.

As indicated, the span of the running surface of the tread cap layer includes the outer running surface of the tread lugs (intended to be ground contacting) and the width of the included grooves between the lugs.

For exemplary FIG 1, the tread base layer may, for example, primarily comprise either cis 1,4-polyisoprene rubber, preferably natural rubber, or a combination of the cis 1,4-polyisoprene rubber and a polybutadiene rubber selected from cis 1,4-polybutadiene rubber and trans 1,4-polybutadiene rubber. Optionally, also it may also contain up to 20 phr (e.g. from 5 to 15 phr) of at least one additional conjugated diene based elastomer such as, for example, at least one additional diene-based elastomer selected from at least one of styrene/butadiene rubber, isoprene/butadiene rubber, trans 1,4-polybutadiene, low vinyl polybutadiene having vinyl content in a range of 10 to 40 percent, and styrene/isoprene/butadiene rubber, preferably a styrene/butadiene copolymer rubber.

In practice, the coupling agent for the precipitated silica of the respective zones of the tread may be, for example, an alkoxysilyl polysulfide such as for example, a bis(3-trialkoxysilylalkyl) polysulfide wherein alkyl radicals for said alkoxy groups are selected from one or more of methyl and ethyl radicals, preferably an ethyl radical and the alkyl radical for said silylalkyl component is selected from butyl, propyl and amyl radicals, preferably a propyl radical and wherein said polysulfide component contains from 2 to 8, with an average of from 2 to 2.6 or an average of from 3.5 to 4, connecting sulfur atoms in its polysulfidic bridge, preferably an average of from 2 to 2.6 connecting sulfur atoms to the exclusion of such polysulfides having greater than 2.6 connecting sulfur atoms.

Representative of such coupling agents are, for example, bis(3-triethoxysilylpropyl) polysulfide having an average of from 2 to 2.6 or an average of from 3.5 to 4, connecting sulfur atoms in its polysulfidic bridge, sometimes preferably an average of from 2 to 2.6 connecting sulfur atoms to the exclusion of a bis(3-triethoxysilylpropyl) polysulfide containing an average of greater than 2.6 connecting sulfur atoms in its polysulfidic bridge.

Such coupling agent may, for example, be added directly to the elastomer mixture or may be added as a composite of precipitated silica and such coupling agent formed by treating a precipitated silica therewith or by treating a colloidal silica therewith and precipitating the resulting composite.

In practice, the synthetic amorphous silica (precipitated silica) may be aggregates of precipitated silica, which is intended to include precipitated aluminosilicates as a co-precipitated silica and aluminum.

Such precipitated silica is, in general, well known to those having skill in such art. For example, such precipitated silica may be precipitated by controlled addition of an acid such as, for example, hydrochloric acid or sulfuric acid, to a basic solution (e.g. sodium hydroxide) of a silicate, for example, sodium silicate, usually in the presence of an electrolyte, for example, sodium sulfate. Primary, colloidal silica particles typically form during such process which quickly coalesce to form aggregates of such primary particles and which are then recovered as precipitates by filtering, washing the resulting filter cake with water or an aqueous solution, and drying the recovered precipitated silica. Such method of preparing precipitated silica, and variations thereof, are well known to those having skill in such art.

The precipitated silica aggregates preferably employed in this invention are precipitated silicas such as, for example, those obtained by the acidification of a soluble silicate, e.g., sodium silicate and may include co-precipitated silica and a minor amount of aluminum.

Such silicas might usually be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The silica may also be typically characterized by having a dibutylphthalate (DBP) absorption value in a range of 50 to 400 cm³/100g, and more usually 100 to 300 cm³/100g.

Various commercially available precipitated silicas may be considered for use in this invention such as, only for example herein, and without limitation, silicas from PPG Industries under the Hi-Sil trademark with designations Hi-Sil 210 and Hi-Sil 243; silicas from Rhodia as, for example, Zeosil 1165MP and Zeosil 165GR; silicas from J. M. Huber Corporation as, for example, Zeopol 8745 and Zeopol 8715; silicas from Degussa AG with, for example, designations VN2, VN3 and Ultrasil 7005; as well as other grades of silica, particularly precipitated silicas, which can be used for elastomer reinforcement.

Representative examples of other silica couplers may be organomercaptosilanes such as, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

For this invention, it is desirable for physical properties of the sulfur cured rubber compositions of the tire tread zones to be as presented in the following Table A.

**Table A**

| | |
|---|---|
| Intermedial zone rubber composition rebound (Zwick) value (100°C), as a percent | At least 4 units greater than the rubber of the lateral tread zones |
| Intermedial zone rubber composition Tan Delta value (1 Hertz, 15% strain, 100°C) kPa | At least 15 percent less than the rubber of the lateral tread zones |
| Lateral zone rubber composition tear resistance, 95°C, in Newtons | At least 20 percent greater than the rubber of the intermedial tread zone |

The tear resistance may be determined, for example, by ASTM D1876-1 taken with DIN 53539 using a 5 mm wide tear width provided by a longitudinal open space, sometimes referred to as a window, cut or otherwise provided, in the film positioned between the two rubber test pieces where the window provides a geometrically defined area, namely the tear width, for portions of two rubber test pieces to be pressed and cured together after which the force to pull the test pieces apart is measured.

In practice, the invention the rubber compositions for the tire tread components may be prepared in a sequential series of at least two separate and individual preparatory internal rubber mixing steps, or stages, in which the diene-based elastomer is first mixed with the prescribed carbon black and/or silica in a subsequent, separate mixing step and followed by a final mixing step where curatives are blended at a lower temperature and for a substantially shorter period of time.

It is conventionally required after each mixing step that the rubber mixture is actually removed from the rubber mixer and cooled to a temperature of less than 40°C and, for example, in a range of about 40°C to about 20°C and then added back to an internal rubber mixer for the next sequential mixing step, or stage.

The forming of a tire component is contemplated to be by conventional means such as, for example, by extrusion of rubber composition to provide a shaped, unvulcanized rubber component such as, for example, a tire tread.

It is understood that the tire, as a manufactured article, is prepared by shaping and sulfur curing the assembly of its components at an elevated temperature (e.g. 140°C to 180°C) and elevated pressure in a suitable mold.

It is readily understood by those having skill in the art that the rubber composition would be compounded by methods generally known in the rubber compounding art, such as mixing the various sulfur-vulcanizable constituent rubbers with various commonly used additive materials, as herein before discussed, such as, for example, curing aids such as sulfur, activators, retarders and accelerators, processing additives, such as rubber processing oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of fatty acids, if used which may comprise stearic acid which may also contain at least one of palmitic and oleac acids, may comprise 0.5 to 3 phr. Typical amounts of zinc oxide comprise 1 to 5 phr. Typical amounts of waxes, if used, comprise 1 to 5 phr. Often microcrystalline waxes are used. Typical amounts of peptizers, if used, comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, or even, in some circumstances, up to 8 phr, with a range of from 1.5 to 2.5, sometimes from 2 to 2.5, being preferred.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4, preferably 0.8 to 2.5, phr. In another embodiment, combinations of a primary and a secondary accelerator might be used with the secondary accelerator being used in smaller amounts (of 0.05 to 3 phr) in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can preferably be accomplished by the aforesaid sequential mixing process. For example, the ingredients may be mixed in at least three stages, namely, at least two non-productive (preparatory) stages followed by a productive (final) mix stage. The final curatives are typically mixed in the final stage which is conventionally called the "productive" or "final" mix stage in which the mixing typically occurs at a temperature, or ultimate temperature, lower than the mix temperature(s) of the preceding non-productive mix stage(s).

### EXAMPLE I

Proposed rubber compositions were prepared for use for the intermedial and lateral tread zone rubber layers for the tire of this invention. The proposed intermedial tread zone rubber composition is referred in this Example as rubber Sample A.

The proposed lateral tread zone rubber composition is referred in this Example as rubber Sample B.

The basic rubber composition formulations are shown in Table 1 and the ingredients are expressed in terms of parts by weight per 100 parts rubber (phr) unless otherwise indicated.

The rubber composition may be prepared by mixing the elastomers(s) without sulfur and sulfur cure accelerators in a first non-productive mixing stage (NP-1) in an internal rubber mixer, for example, for 4 minutes to a temperature of, for example, of 160°C. If desired, the rubber mixture may then mixed in a second non-productive mixing stage (NP-2) in an internal rubber mixer, for example, for 4 minutes to a temperature of, for example, 160°C with or without adding additional ingredients. The resulting rubber mixture may then be mixed in a productive mixing stage (PR) in an internal rubber mixer with sulfur and sulfur cure accelerator(s), for example, for 2 minutes to a temperature of, for example, 110°C. The rubber composition may then sheeted out and cooled to, for example, below 50°C between each of the non-productive mixing steps and prior to the productive mixing step. Such rubber mixing procedure is well known to those having skill in such art.

The following Table 1 presents basic rubber formulations for proposed intermedial tire tread zone (rubber Sample A) and peripheral tire tread zone (rubber Sample B) rubber compositions for the zoned tread of this invention.

**Table 1 (Intermedial and Lateral Tread Cap Zones)**

| | Parts (phr) | |
|---|---|---|
| Non-productive Mix Step (NP1) | A (Intermedial) | B (Lateral) |
| Natural cis 1,4-polyisoprene rubber (TTR20) | 35 | 35 |
| Cis 1,4-polybutadiene rubber¹ | 65 | 65 |
| Carbon black (N121) | 35 | 35 |
| Silica, precipitated² | 15 | 15 |
| Silica coupling agent³ | 2 | 0 |
| Composite of silica coupling agent and carbon black (50/50 weight ratio)* ⁴ | 0 | 2 |
| Wax microcrystalline and paraffin | 1.5 | 1.5 |
| Fatty acid⁵ | 2 | 2 |
| Antioxidants | 4 | 4 |
| Zinc oxide | 3 | 3 |
| | | |

| Final Mix Step (PR) | | |
|---|---|---|
| Sulfur | 1.1 | 0.9 |
| Accelerator(s)⁶ | 1.6 | 1.5 |

| | | |
|---|---|---|
| *Therefore 1 phr of coupling agent and 1 phr rubber reinforcing carbon black. ¹Cis 1,4-polybutadiene rubber (said organic solvent solution polymerized 1,3-butadiene monomer in the presence of a neodymium catalyst) as CB25™ from the Lanxess Company having a Tg of about -105°C and heterogeneity index in a range of from 1.5/1 to 2.2/1 ²Precipitated silica as Zeosil™ Z1165 MP from the Rhodia Company ³Silica coupling agent comprised of bis(3-triethoxysilylpropyl) polysulfide having an average of from 2 to 2.6 connecting sulfur atoms as Si266™ from Evonic ⁴Composite of silica coupling agent and carbon black (carrier) in a 50/50 weight ratio where said coupling agent comprises bis(3-triethoxysilylpropyl) polysulfide having an average of from 2 to 2.6 connecting sulfur atoms as Si266™ from Evonic ⁵Mixture comprised of stearic, palmitic and oleic acids ⁶Sulfenamide with diphenyl guanidine sulfur cure accelerators with retarder as needed | | |

The following Table 2 represents the uncured and cured behavior and various physical properties of the rubber compositions for the intermedial (rubber Sample A) and lateral (rubber Sample B) tire tread zone rubber layers based upon the basic formulations illustrated in Table 1.

**Table 2**

| Properties | A (Intermedial) | B (Lateral) |
|---|---|---|
| RPA (Rubber Process Analyzer) test¹ | | |
| Dynamic storage modulus (G') | | |
| Cured rubber G' (1 Hertz, 10% strain, 100°C), kPa | 1.79 | 1.49 |
| Tan delta (1 Hertz, 10% strain, 100°C) | 0.091 | 0.122 |
| | | |
| Stress-strain. ATS² | | |
| Tensile strength (MPa) | 21.2 | 20.8 |
| Elongation at break (%) | 461 | 529 |
| 300% modulus, ring, (MPa) | 12.1 | 9.66 |
| | | |
| Rebound (Zwick) | | |
| 23°C | 59 | 55 |
| 100°C | 69 | 64 |
| | | |
| Shore A Hardness | | |
| 23°C | 65 | 63 |
| 100°C | 61 | 58 |
| | | |
| Tear Strength (tear resistance)³, N | | |
| At 95°C | 88 | 121 |
| | | |
| Abrasion rate (mg/km), Grosch⁴ | | |
| High severity (70N), 12° slip angle, disk speed = | | |
| 20 km/hr., distance = 250 meters | 369 | 368 |

| | | |
|---|---|---|
| ¹ RPA, rubber property analytical instrument ²Automated Test System instrument (ATS), Instron Corporation, which incorporates a number of tests in one analytical system and reports data from the tests such as, for example, ultimate tensile strength, ultimate elongation, modulii and energy to break data. ³Data obtained according to a tear strength (peal adhesion), or tear resistance test. The tear resistance may be determined by ASTM D1876-01 taken with DIN 53539 using a 5 mm wide tear width provided by a longitudinal open space, sometimes referred to as a window, cut or otherwise provided, in the film positioned between the two rubber test pieces where the window provides a geometrically defined area, namely tear width, for portions of two rubber test pieces to be pressed and cured together after which the ends of the two test pieces are pulled apart at right angles (90° + 90° = 180° to each other) and the force to pull the test pieces apart is measured. An Instron instrument may be used to pull the rubber pieces apart using an Instron instrument at 95°C with the force required being reported as Newtons force. ⁴The Grosch high severity abrasion rate may be conducted on an LAT-100 Abrader and is measured in terms of mg/km of rubber abraded away. The test rubber sample is placed at a slip angle under constant load (Newtons) as it traverses a given distance on a rotating abrasive disk (disk from HB Schleifmittel GmbH). In practice, a high abrasion severity test may be run, for example, at a load of 70 Newtons, 12° slip angle, disk speed of 20 km/hr and distance of 250 meters. | | |

It is seen in Table 2 that the Experimental rubber Sample A (rubber composition proposed for the intermedial tread zone) and Experimental rubber Sample B (rubber composition proposed for the lateral tread zones) fulfilled the beneficially desired physical property relationships presented in Table A for 100°C hot rebound, and tear resistance (95°C) values.

In Table 2 it is seen that the rebound value for rubber Sample A (proposed intermedial tread zone rubber composition) was greater than the for rubber Sample B (proposed peripheral tread zone rubber composition) which is indicative of beneficially lower hysteresis which in turn is predictive of a beneficially lower rate of internal heat generation in the intermedial tread zone rubber composition as well as predictively beneficial reduction of rolling resistance for the tire with a resulting predictive fuel economy for a vehicle using such tires.

Further, in Table 2 it is seen that tear resistance for rubber Sample B (proposed lateral tread zone rubber composition) was beneficially significantly greater than for rubber Sample A (proposed intermedial tread zone rubber composition).

Further, it is seen in Table 2 that the high severity Grosch rates of abrasion for both rubber Sample A (proposed intermedial tread zone rubber) and rubber Sample B (lateral tread zone rubber) are similar, which is a desirable feature.

Further, it is seen in Table 2 that the tangent delta (tan delta) value for rubber Sample B (proposed lateral tread zone rubber) is greater than for rubber Sample A (proposed intermedial tread zone rubber). Such tan delta properties, taken with the aforesaid rebound properties, are a further indication of lower hysteresis, lower internal heat generation during tire service for the intermedial tread rubber zone as well as the aforesaid predictive beneficial promotion of reduction in tire rolling resistance for increased vehicular fuel economy.

In summary and conclusion, a tire is provided with a configured circumferential tread zones to provide a running surface with zones having similar rates of abrasion resistance but with lower hysteresis in the intermedial tread zone which extends axially outward beneath the higher hysteresis lateral tread zones for a purpose of maximizing such lower hysteresis for the tread and with a higher tear resistance for the lateral tread rubber zone to promote resistance to groove surface cracking in tread groove(s) contained in the lateral tread zones.

Such innovative tread configuration is intended to promote lower rolling resistance for the tire tread across the width of the tread by the extended intermedial tread zone which extends axially outward beneath the lateral tread zones and to beneficially promote tear resistance for the outlying lateral tread zones, the combination of which is considered to be a significant departure from past practice.

## Claims

1. A tire having a circumferential rubber tread having a cap/base configuration comprising a radially outer tread cap rubber layer (3) with a lug and groove configuration with the radially outer portions of the tread lugs providing the running surface of the tread (2), and a tread base rubber layer (4) underlying the tread cap rubber layer (3);
wherein the tread cap rubber layer (3) is composed of or comprises at least three circumferential load bearing zones (5A, 6, 5B) comprising an intermediate tread zone rubber layer (6) positioned between and extending beneath two lateral tread zone rubber layers (5A, 5B) and underlying the lateral tread zone rubber layers (5A, 5B) and overlying the tread base rubber layer (4) to therefore stratify the lateral tread zone rubber layers (5A, 5B) as being separated from each other and from the tread base rubber layer (3);
wherein outer tread lug surfaces of the intermediate tread zone rubber layer (6) and the lateral tread zone rubber layers (5A, 5B) comprise the running surface of the tread; and
wherein the rubber composition of the intermediate tread zone rubber layer (6) has a 100°C hot rebound property greater than the 100°C hot rebound property of the rubber composition of the preferably stratified lateral tread rubber layers (5A, 5B),
**characterized in that** the lateral tread zone rubber layer composition has an at least 20 percent greater tear resistance property than the intermediate tread zone rubber layer composition and **in that** the intermediate and the lateral tread zones are configured with lugs and intervening grooves with each lateral tread zone (5A, 5B) containing at least one tread groove (7A, 7B).

2. The tire of claim 1, wherein the value of the 100°C hot rebound property of the intermediate tread zone rubber layer composition is at least 4 units greater than the 100°C hot rebound property value of the lateral tread zone rubber layer composition.

3. The tire of claim 1 or 2,wherein the 100°C hot rebound value of the intermediate tread zone rubber layer composition is in a range of from 60 to 80 percent and the 100°C hot rebound value of the rubber composition of the lateral tread zone rubber composition is in a range of from 56 to 76 so long as the 100°C rebound values differ by at least 4 units.

4. The tire of at least one of the previous claims, wherein the elastomers of the rubber compositions of the intermediate tread zone rubber layer (6) and lateral tread zone rubber layers (5A, 5B) are the same or different so long as the 100°C hot rebound property of the rubber composition of the intermediate tread zone rubber layer (6) is greater than the 100°C hot rebound property of the rubber composition of the lateral rubber zone rubber layers (5A, 5B).

5. The tire of at least one of the previous claims, wherein the elastomers of the rubber compositions of the intermediate tread zone rubber layer (6) and lateral tread zone rubber layers (5A, 5B) are the same or different and comprise a rubber reinforcing carbon black and/or silica such as precipitated silica so long as the 100°C hot rebound property of the rubber composition of the intermediate tread zone rubber layer (6) is greater than the 100°C hot rebound property of the rubber composition of the lateral rubber zone rubber layers (5A, 5B).

6. The tire of at least one of the previous claims wherein the intermediate tread zone rubber layer (6) and/or the lateral tread zone rubber layers (5A, 5B) are relatively silica rich containing at least 40 phr of silica and a maximum of 30 phr of carbon black.

7. The tire of at least one of the previous claims 1 to 5 wherein the intermediate tread zone rubber layer (6) and/or the lateral tread zone rubber layers (5A, 5B) are relatively carbon black rich containing at least 40 phr of carbon black and preferably less than 30 phr, alternatively less than 20 phr, of silica.

8. The tire of at least one of the previous claims wherein the span of the running surface of the intermediate tread zone rubber layer (6) axially spans from 30 to 80 percent, alternatively from 50 to 70 percent, of the running surface of the tread cap rubber layer (3) and the two lateral tread rubber zone rubber layers (5A, 5B) collectively span from 20 to 70 percent, alternatively from 30 to 50 percent, of the running surface of the tread cap rubber layer (3) wherein said span of the running surface of the tread (2) includes the running surfaces of the tread lugs and widths of the tread grooves between the tread lugs.

9. The tire of claim 8 wherein the span of the running surfaces of the two individual lateral tread zones (5A, 5B) are of substantially equal widths.

10. The tire of claim 8 wherein the span of the running surfaces of the two individual lateral tread zones (5A, 5B) is asymmetrical in the sense that they are of unequal widths.

11. The tire of at least one of the preceding claims wherein the rubber of the intermediate tread zone rubber layer (6) has a lower tan delta value at 10 percent strain (100°C) than the rubber of the two stratified lateral tread zone rubber layers (5A, 5B); and/or wherein the tear resistance (Newtons at 95°C) of the rubber composition of the two lateral tread zones rubber layers (5A, 5B) is at least 20 percent greater than the tear resistance of the rubber composition of the intermediate tread zone rubber layer (6).

12. The tire of at least one of the previous claims wherein the intermediate and the lateral tread zones are configured with lugs and intervening grooves with the lateral tread zones each containing at least one tread groove (7A, 7B).

13. The tire of at least one of the previous claims comprising a path of low or least electrical resistance extending from one or both of the respective lateral rubber tread zones (5A, 5B) to the tread base rubber layer (4) by one or more extensions (8A, 8B) of a respective lateral tread zone layer (5A, 5B) which extend to and join the tread base rubber layer (4) and/or by at least one intermediate rubber bridge (10) which extends between and joins the one or both respective lateral tread zone rubber layers (5A, 5B) and the tread base rubber layer (4).

14. The tire of claim 13 wherein the at least one intermediate rubber bridge is part of or an extension of the intermediate tread zone rubber layer (6).

## Patentansprüche

1. Reifen mit einer umfangsgerichteten Kautschuklauffläche mit einer Laufstreifenoberteil-/Laufstreifenunterteilkonfiguration, umfassend eine radial äußere Laufstreifenoberteil-Kautschuklage (3) mit einer Stollen- und Rillen-Konfiguration, wobei die radial äußeren Teile der Profilstollen die Laufoberfläche der Lauffläche (2) bereitstellen, und eine unter der Laufstreifenoberteil-Kautschuklage (3) liegende Laufstreifenunterteil-Kautschuklage (4);
wobei die Laufstreifenoberteil-Kautschuklage (3) aus mindestens drei umfangsgerichteten lasttragenden Zonen (5A, 6, 5B) zusammengesetzt ist oder diese umfasst, umfassend eine zwischenliegende Laufflächenzonen-Kautschuklage (6), die zwischen zwei seitlichen Laufflächenzonen-Kautschuklagen (5A, 5B) angeordnet ist und sich unter diesen erstreckt und unter den seitlichen Laufflächenzonen-Kautschuklagen (5A, 5B) liegt und über der Laufstreifenunterteil-Kautschuklage (4) liegt, um dadurch die seitlichen Laufflächenzonen-Kautschuklagen (5A, 5B) als voneinander und von der Laufstreifenunterteil-Kautschuklage (3) getrennt zu stratifizieren;
wobei äußere Profilstollenoberflächen der zwischenliegenden Laufflächenzonen-Kautschuklage (6) und der seitlichen Laufflächenzonen-Kautschuklagen (5A, 5B) die Laufoberfläche der Lauffläche umfassen; und
wobei die Kautschukzusammensetzung der zwischenliegenden Laufflächenzonen-Kautschuklage (6) eine 100°C-Warmrückpralleigenschaft aufweist, die größer als die 100°C-Warmrückpralleigenschaft der Kautschukzusammensetzung der bevorzugt stratifizierten seitlichen Laufflächen-Kautschuklagen (5A, 5B) ist,
**dadurch gekennzeichnet, dass** die seitliche Laufflächenzonen-Kautschuklagenzusammensetzung eine mindestens 20 Prozent größere Reißfestigkeitseigenschaft als die zwischenliegende Laufflächenzonen-Kautschuklagenzusammensetzung aufweist und dass die zwischenliegende und die seitlichen Laufflächenzonen mit Stollen und dazwischentretenden Rillen konfiguriert sind, wobei jede seitliche Laufflächenzone (5A, 5B) mindestens eine Profilrille (7A, 7B) enthält.

2. Reifen nach Anspruch 1, wobei der Wert der 100°C-Warmrückpralleigenschaft der zwischenliegenden Laufflächenzonen-Kautschuklagenzusammensetzung mindestens 4 Einheiten größer als der 100°C-Warmrückpralleigenschaftswert der seitlichen Laufflächen-Kautschuklagenzusammensetzung ist.

3. Reifen nach Anspruch 1 oder 2, wobei der 100°C-Warmrückprallwert der zwischenliegenden Laufflächenzonen-Kautschuklagenzusammensetzung im Bereich von 60 bis 80 Prozent liegt und der 100°C-Warmrückprallwert der Kautschukzusammensetzung der seitlichen Laufflächenzonen-Kautschukzusammensetzung im Bereich von 56 bis 76 liegt, solange die 100°C-Rückprallwerte sich um mindestens 4 Einheiten unterscheiden.

4. Reifen nach mindestens einem der vorhergehenden Ansprüche, wobei die Elastomere der Kautschukzusammensetzungen der zwischenliegenden Laufflächenzonen-Kautschuklage (6) und der seitlichen Laufflächenzonen-Kautschuklagen (5A, 5B) dieselben oder verschieden sind, solange die 100°C-Warmrückpralleigenschaft der Kautschukzusammensetzung der zwischenliegenden Laufflächenzonen-Kautschuklage (6) größer als die 100°C-Warmrückpralleigenschaft der Kautschukzusammensetzung der seitlichen Kautschukzonen-Kautschuklagen (5A, 5B) ist.

5. Reifen nach mindestens einem der vorhergehenden Ansprüche, wobei die Elastomere der Kautschukzusammensetzungen der zwischenliegenden Laufflächenzonen-Kautschuklage (6) und der seitlichen Laufflächenzonen-Kautschuklagen (5A, 5B) dieselben oder verschieden sind und ein Kautschukverstärkungs-Carbon Black und/oder Silika, wie etwa ausgefälltes Silika, umfassen, solange die 100°C-Warmrückpralleigenschaft der Kautschukzusammensetzung der zwischenliegenden Laufflächenzonen-Kautschuklage (6) größer als die 100°C-Warmrückpralleigenschaft der Kautschukzusammensetzung der seitlichen Kautschukzonen-Kautschuklagen (5A, 5B) ist.

6. Reifen nach mindestens einem der vorhergehenden Ansprüche, wobei die zwischenliegende Laufflächenzonen-Kautschuklage (6) und/oder die seitlichen Laufflächenzonen-Kautschuklagen (5A, 5B) relativ silikareich sind, wobei sie mindestens 40 phr Silika und ein Maximum von 30 phr Carbon Black enthalten.

7. Reifen nach mindestens einem der vorhergehenden Ansprüche 1 bis 5, wobei die zwischenliegende Laufflächenzonen-Kautschuklage (6) und/oder die seitlichen Laufflächenzonen-Kautschuklagen (5A, 5B) relativ Carbon Black-reich sind, wobei sie mindestens 40 phr Carbon Black und bevorzugt weniger als 30 phr, alternativ weniger als 20 phr, Silika enthalten.

8. Reifen nach mindestens einem der vorhergehenden Ansprüche, wobei die Spanne der Laufoberfläche der zwischenliegenden Laufflächenzonen-Kautschuklage (6) axial 30 bis 80 Prozent, alternativ 50 bis 70 Prozent, der Laufoberfläche der Laufstreifenoberteil-Kautschuklage (3) überspannt und die zwei seitlichen Laufflächenkautschukzonen-Kautschuklagen (5A, 5B) kollektiv 20 bis 70 Prozent, alternativ 30 bis 50 Prozent, der Laufoberfläche der Laufstreifenoberteil-Kautschuklage (3) überspannen, wobei die Spanne der Laufoberfläche der Lauffläche (2) die Laufoberflächen der Profilstollen und die Breiten der Profilrillen zwischen den Profilstollen beinhaltet.

9. Reifen nach Anspruch 8, wobei die Spanne der Laufoberflächen der zwei individuellen seitlichen Laufflächenzonen (5A, 5B) im Wesentlichen gleiche Breiten aufweisen.

10. Reifen nach Anspruch 8, wobei die Spanne der Laufoberflächen der zwei individuellen seitlichen Laufflächenzonen (5A, 5B) asymmetrisch ist, in dem Sinn, dass sie ungleiche Breiten aufweisen.

11. Reifen nach mindestens einem der vorhergehenden Ansprüche, wobei der Kautschuk der zwischenliegenden Laufflächenzonen-Kautschuklage (6) einen niedrigeren tan Delta-Wert bei 10 Prozent Dehnung (100°C) als der Kautschuk der zwei stratifizierten seitlichen Laufflächenzonen-Kautschuklagen (5A, 5B) aufweist; und/oder wobei die Reißfestigkeit (Newton bei 95°C) der Kautschukzusammensetzung der zwei seitlichen Laufflächenzonen-Kautschuklagen (5A, 5B) mindestens 20 Prozent größer als die Reißfestigkeit der Kautschukzusammensetzung der zwischenliegenden Laufflächenzonen-Kautschuklage (6) ist.

12. Reifen nach mindestens einem der vorhergehenden Ansprüche, wobei die zwischenliegende und die seitlichen Laufflächenzonen mit Stollen und dazwischentretenden Rillen konfiguriert sind, wobei die seitlichen Laufflächenzonen jede mindestens eine Profilrille (7A, 7B) enthalten.

13. Reifen nach mindestens einem der vorhergehenden Ansprüche, umfassend einen Pfad mit niedrigem oder geringstem elektrischen Widerstand, der sich von einer oder beiden der jeweiligen seitlichen Kautschuk-Laufflächenzonen (5A, 5B) zu der Laufstreifenunterteil-Kautschuklage (4) erstreckt, durch eine oder mehr Verlängerungen (8A, 8B) einer jeweiligen seitlichen Laufflächenzonenlage (5A, 5B), die sich bis zu der Laufstreifenunterteil-Kautschuklage (4) erstrecken und an dieser anschließen, und/oder durch mindestens eine zwischenliegende Kautschukbrücke (10), die sich zwischen der einen oder beiden jeweiligen seitlichen Laufflächenzonen-Kautschuklagen (5A, 5B) und der Laufstreifenunterteil-Kautschuklage (4) erstreckt und an diese anschließt.

14. Reifen nach Anspruch 13, wobei die mindestens eine zwischenliegende Kautschukbrücke Teil von oder eine Verlängerung der zwischenliegenden Laufflächenzonen-Kautschuklage (6) ist.

## Revendications

1. Bandage pneumatique possédant une bande de roulement circonférentielle en caoutchouc possédant une configuration de type chape/base comprenant une couche de caoutchouc (3) de la chape de la bande de roulement, externe en direction radiale, possédant une configuration du type à barrettes et à rainures, les portions externes en direction radiale des barrettes de la bande de roulement procurant la surface de roulement de la bande de roulement (2), et une couche de caoutchouc (4) de la base de la bande de roulement, sous-jacente à la couche de caoutchouc (3) de la chape de la bande de roulement ;
dans lequel la couche de caoutchouc (3) de la chape de la bande de roulement se compose d'au moins trois zones circonférentielles (5A, 6, 5B) supportant la charge ou comprend lesdites zones, celles-ci comprenant une couche de caoutchouc (6) de la zone intermédiaire de la bande de roulement disposée entre deux couches de caoutchouc des zones latérales de la bande de roulement (5A, 5B) et sous-jacente aux couches de caoutchouc des zones latérales de la bande de roulement (5A, 5B) et recouvrant la couche de caoutchouc (4) de la base de la bande de roulement pour stratifier par conséquent les couches de caoutchouc (5A, 5B) des zones latérales de la bande de roulement pour ainsi les séparer l'une de l'autre et de la couche de caoutchouc (3) de la chape de la bande de roulement ;
dans lequel les surfaces externes des barrettes de la bande de roulement de la couche de caoutchouc (6) de la zone intermédiaire de la bande de roulement et les couches de caoutchouc (5A, 5B) des zones latérales de la bande de roulement comprennent la surface de roulement de la bande de roulement ; et
dans lequel la composition de caoutchouc de la couche de caoutchouc (6) de la zone intermédiaire de la bande de roulement possède une propriété de rebond à chaud à une température de 100 °C, supérieure à la propriété de rebond à chaud à une température de 100 De de la composition de caoutchouc des couches de caoutchouc (5A, 5B) des zones latérales de la bande de roulement, de préférence stratifiées ;
**caractérisé en ce que** la composition des couches de caoutchouc des zones latérales de la bande de roulement possède une propriété de résistance au déchirement supérieur à concurrence d'au moins 20 % à celle de la composition de la couche de caoutchouc de la zone intermédiaire de la bande de roulement et **en ce que** les zones intermédiaires et latérales de la bande de roulement sont configurées avec des barrettes et de rainures intercalées, chaque zone latérale de la bande de roulement (5A, 5B) contenant au moins une rainure de bande de roulement (7A, 7B).

2. Bandage pneumatique selon la revendication 1, dans lequel la valeur de la propriété de rebond à chaud à une température de 100 °C de la composition de la couche de caoutchouc de la zone intermédiaire de la bande de roulement est supérieure à concurrence d'au moins 4 unités à la valeur de la propriété de rebond à chaud à une température de 100 °C de la composition des couches de caoutchouc des zones latérales de la bande de roulement.

3. Bandage pneumatique selon la revendication 1 ou 2, dans lequel la valeur de la propriété de rebond à chaud à une température de 100 °C de la composition de la couche de caoutchouc de la zone intermédiaire de la bande de roulement se situe dans une plage de 60 à 80 % et la valeur de la propriété de rebond à chaud à une température de 100 °C de la composition des couches de caoutchouc des zones latérales de la bande de roulement se situe dans une plage de 56 à 76, pour autant que les valeurs de rebond à une température de 100 °C diffèrent à concurrence d'au moins 4 unités.

4. Bandage pneumatique selon au moins une des revendications précédentes, dans lequel les élastomères des compositions de caoutchouc de la couche de caoutchouc (6) de la zone intermédiaire de la bande de roulement et des couches de caoutchouc (5A, 5B) des zones latérales de la bande de roulement sont identiques ou différentes pour autant que la propriété de rebond à chaud à une température de 100 °C de la composition de caoutchouc de la couche de caoutchouc (6) de la zone intermédiaire de la bande de roulement soit supérieure à la propriété de rebond à chaud à une température de 100 °C de la composition de caoutchouc des couches de caoutchouc (5A, 5B) des zones latérales de la bande de roulement.

5. Bandage pneumatique selon au moins une des revendications précédentes, dans lequel les élastomères des compositions de caoutchouc de la couche de caoutchouc (6) de la zone intermédiaire de la bande de roulement et des couches de caoutchouc (5A, 5B) des zones latérales de la bande de roulement sont identiques ou différentes et comprennent du noir de carbone pour le renforcement du caoutchouc et/ou de la silice telle que de la silice précipitée pour autant que la propriété de rebond à chaud à une température de 100 °C de la composition de caoutchouc de la couche de caoutchouc (6) de la zone intermédiaire de la bande de roulement soit supérieure à la propriété de rebond à chaud à une température de 100 °C de la composition de caoutchouc des couches de caoutchouc (5A, 5B) des zones latérales de la bande de roulement.

6. Bandage pneumatique selon au moins une des revendications précédentes, dans lequel la couche de caoutchouc (6) de la zone intermédiaire de la bande de roulement et/ou les couches de caoutchouc (5A, 5B) des zones latérales de la bande de roulement sont relativement riches en silice, contenant au moins 40 phr de silice et un maximum de 30 phr de noir de carbone.

7. Bandage pneumatique selon au moins une des revendications précédentes 1 à 5, dans lequel la couche de caoutchouc (6) de la zone intermédiaire de la bande de roulement et/ou les couches de caoutchouc (5A, 5B) des zones latérales de la bande de roulement sont relativement riches en noir de carbone, contenant au moins 40 phr de noir de carbone, et de préférence moins de 30 phr, en variante moins de 20 phr de silice.

8. Bandage pneumatique selon au moins une des revendications précédentes, dans lequel l'étendue de la surface de roulement de la couche de caoutchouc (6) de la zone intermédiaire de la bande de roulement représente en direction axiale de 30 à 80 %, en variante de 50 à 70 % de la surface de roulement de la couche de caoutchouc (3) de la chape de la bande de roulement et les deux couches de caoutchouc (5A, 5B) des zones latérales en caoutchouc de la bande de roulement représentent de manière collective une étendue de 20 % à 70 %, en variante de 30 à 50 % de la surface de roulement de la couche de caoutchouc (3) de la chape de la bande de roulement, ladite étendue de la surface de roulement de la bande de roulement (2) englobant les surfaces de roulement des barrettes de la bande de roulement et des largeurs des rainures de la bande de roulement entre les barrettes de la bande de roulement.

9. Bandage pneumatique selon la revendication 8, dans lequel les étendues des surfaces de roulement des deux zones latérales individuelles (5A, 5B) de la bande de roulement possèdent des largeurs essentiellement égales.

10. Bandage pneumatique selon la revendication 8, dans lequel les étendues des surfaces de roulement des deux zones latérales individuelles (5A, 5B) de la bande de roulement sont asymétriques dans le sens où elles possèdent des largeurs inégales.

11. Bandage pneumatique selon au moins une des revendications précédentes, dans lequel le caoutchouc de la zone intermédiaire (6) faisant office de chape de la bande de roulement possède une valeur tan delta inférieure à une déformation de 10 % (à 100 °C) à celle du caoutchouc des deux zones latérales (5A, 5B) de la bande de roulement et/ou dans lequel la résistance au déchirement (en Newtons à 95 °C) de la composition de caoutchouc des deux zones latérales (5A, 5B) de la bande de roulement est supérieure à concurrence d'au moins 20 % à la résistance au déchirement de la composition de caoutchouc de la zone intermédiaire (6) de la bande de roulement.

12. Bandage pneumatique selon au moins une des revendications précédentes, dans lequel la zone intermédiaire et les zones latérales de la bande de roulement sont configurées avec des barrettes et avec des rainures intercalaires, les zones latérales de la bande de roulement contenant chacune au moins une rainure de bande de roulement (7A, B).

13. Bandage pneumatique selon au moins une des revendications précédentes, comprenant un chemin de faible résistance électrique ou de résistance électrique minimale s'étend à partir d'une des zones de caoutchouc latérales respectives de la bande de roulement (5A, 5B) ou à partir des deux en direction de la couche de caoutchouc (4) de la base de la bande de roulement via un ou plusieurs prolongements (8A, 8B) d'une couche respective de la zone latérale de la bande de roulement (5A, 5B) qui s'étendent en direction de la couche de caoutchouc (4) de la base de la bande de roulement et qui s'y joignent et/ou via au moins un pont intermédiaire en caoutchouc (10) qui s'étend entre ladite une couche de caoutchouc respective de la zone latérale de la bande de roulement ou entre lesdites deux couches (5A, 5B) et la couche de caoutchouc (4) de la base de la bande de roulement.

14. Bandage pneumatique selon la revendication 13, dans lequel ledit au moins un pont intermédiaire en caoutchouc fait partie de la couche de caoutchouc (6) de la zone intermédiaire de la bande de roulement ou représente un prolongement de ladite couche.
